# EUROPEAN PATENT APPLICATION

(11) **EP 4 002 110 A1**
(43) Date of publication of application: **25.05.2022**
(21) Application number: 21209006.2
(22) Date of filing: 18.11.2021
(51) Int. Cl.: G06F 9/445, G06F 8/60, G06F 8/76

(54) **SYSTEM AND METHOD FOR ADAPTIVE RELEASE OF APPLICATION PROGRAM IN DIFFERENT ENVIRONMENTS**

(30) Priority: 20.11.2020 CN 202011307468
(71) Applicant: Shenzhen Sekorm Component Network Co., Ltd, Shenzhen, Guangdong (CN)
(72) Inventor: FENG, Xing, Shenzhen (CN)
(74) Representative: Westphal, Mussgnug & Partner, Patentanwälte mbB

(57) **Abstract**

The present invention relates to a system and a method for adaptive release of application program in different environments. The system includes: a configuration library and at least two application servers. The configuration library includes a configuration parameter matching with each of the application servers; an application program that does not include a configuration parameter is transmitted to the configuration library, and the configuration library configures, for the application program, the configuration parameter that corresponds to the application server in which release is to be made, and after completion of the configuration, the application program that includes the configuration parameter is transmitted to the corresponding application server. The present invention separates the configuration parameter from the application program and arranges an independent configuration library to store a configuration parameter matching with each one of the application servers, and when the application program is to be released, the configuration library conducts a corresponding configuration according to a release environment, reducing working load of the development staffs and increasing working efficiency.

## Description

### FIELD OF THE INVENTION

The present invention relates to the field of adaptation of application programs, and more particularly to a system and a method for adaptive release of application program in different environments.

### DESCRIPTION OF THE RELATED ART

After having been completely developed, an application program requires parameter adaptation conducted according to different application environments. In the existing solutions of release, software business application programs, when released to different environments, requires making different tags in the applications. For example, to be released to a development application server, a business application program must be marked with a "dev" tag; to be released to a test application server, a business application program must be marked with a "test" tag. If an attempt for releasing a business application program to multiple environments in one time, in order to achieve such a task, multiple sets of the business application program must be prepared with different tags marked thereon. This greatly increases the working load for the development staffs.

### SUMMARY OF THE INVENTION

The technical issue that the present invention aims to resolve is to provide, in view of the above-described deficiency of the prior art, a system and a method for adaptive release of application program in different environments.

The technical solution that the present invention adopts to resolve the technical issue is to construct a system for adaptive release of application program in different environments, which comprises: a configuration library and at least two application servers, the configuration library comprising a configuration parameter matching with each of the application servers;

an application program that does not include a configuration parameter being transmitted to the configuration library, the configuration library configuring, for the application program, the configuration parameter that corresponds to the application server in which release is to be made, and after completion of the configuration, the application program that includes the configuration parameter being transmitted to the corresponding application server.

Further, in the system for adaptive release of application program in different environments according to the present invention, the configuration library, when receiving the application program that does not include a configuration parameter, simultaneously receiving a configuration command, the configuration command comprising application server information for releases of the application program to be made..

Further, in the system for adaptive release of application program in different environments according to the present invention, the configuration library receives a configuration parameter adding command, and the configuration library receives and stores a configuration parameter corresponding to a newly added application server.

Further, in the system for adaptive release of application program in different environments according to the present invention, the configuration library receives a configuration parameter deleting command, and the configuration library deletes the configuration parameter corresponding to the application server contained in the configuration parameter deleting command.

Further, in the system for adaptive release of application program in different environments according to the present invention, the configuration library receives a configuration parameter modifying command, and the configuration library receives contents of modification and modifies an already-stored configuration parameter.

Further, the present invention also provides a method for adaptive release of application program in different environments, which comprises:
S1, a configuration library receiving an application program that does not include a configuration parameter, wherein the configuration library comprises at least two configuration parameters, each configuration parameter matching with an application server;
S2, the configuration library configures, for the application program, a configuration parameter that corresponds to the application server in which release is to be made; and
S3, after completion of the configuration, transmitting the application program that includes the configuration parameter to the corresponding application server.

Further, in the method for adaptive release of application program in different environments according to the present invention, a configuration library receiving an application program that does not include a configuration parameter of Step S1 comprises:
a configuration library receiving an application program that does not include a configuration parameter and a configuration command, the configuration command comprising application server information for releases of the application program to be made.

Further, the method for adaptive release of application program in different environments according to the present invention further comprises:
S4, the configuration library receiving a configuration parameter adding command, the configuration library receiving and storing a configuration parameter corresponding to a newly added application server.

Further, the method for adaptive release of application program in different environments according to the present invention further comprises:
S5, the configuration library receiving a configuration parameter deleting command, and the configuration library deleting the configuration parameter corresponding to the application server contained in the configuration parameter deleting command.

Further, the method for adaptive release of application program in different environments according to the present invention further comprises:
S6, the configuration library receiving a configuration parameter modifying command, and the configuration library receiving contents of modification and modifying an already-stored configuration parameter.

Implementation of the system and method for adaptive release of application program in different environments according to the present invention provides the following beneficial effects. The present invention separates the configuration parameter from the application program and arranges an independent configuration library to store a configuration parameter matching with each one of the application servers, and when the application program is to be released, the configuration library conducts a corresponding configuration according to a release environment, reducing working load of the development staffs and increasing working efficiency.

### BRIEF DESCRIPTION OF THE DRAWINGS

A detailed description of the present invention will be provided below with reference to the attached drawings and embodiments, and in the drawings:
FIG. 1 is a schematic view illustrating a structure of a system for adaptative release of application program in different environments provided according to an embodiment; and
FIG. 2 is a flow chart illustrating a method for adaptative release of application program in different environments provided according to an embodiment.

### DETAILED DESCRIPTION OF PREFERRED EMBODIMENTS OF THE INVENTION

For better understanding of the technical features, purposes, and efficacy of the present invention, embodiments of the present invention will be described in detail with reference to the drawings.

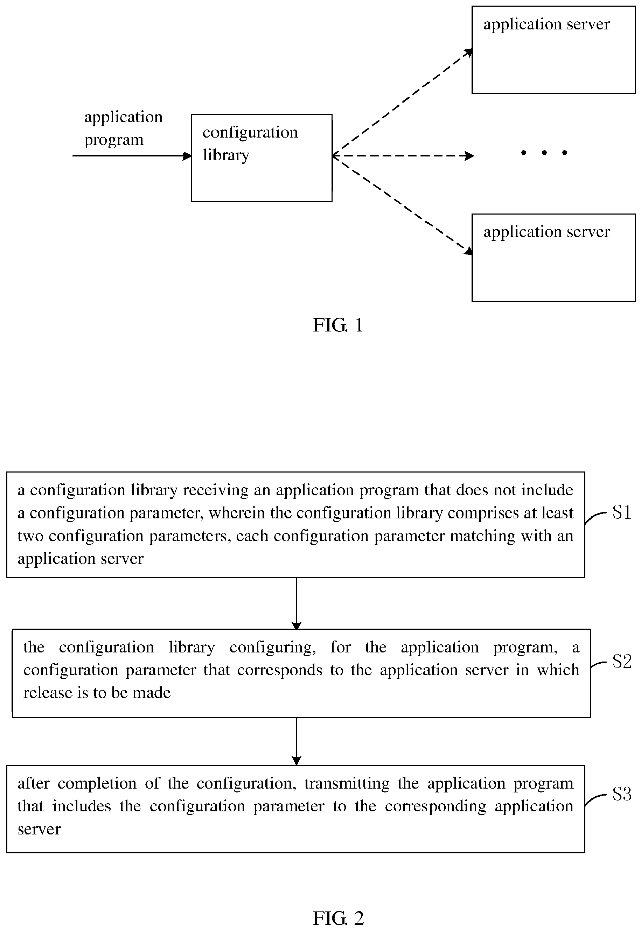

In a preferred embodiment, referring to FIG. 1, the system for adaptive release of application program in different environments comprises: a configuration library and at least two application servers, and the configuration library is in communication connection with each of the application servers; optionally, the configuration library is arrangeable in an independent server. Each of the application servers is operable in a different environment, meaning a configuration parameter required by each of the application servers for an application program is different. Taking a development environment parameter of a development application server and a test environment parameter of a test application server as an example, the two environment parameters are different. The instant embodiment separates configuration parameters from application programs, meaning the environment configuration item of an application program is set independent individually, and such configuration parameters (the environment configuration items) are individually set/stored in the configuration library, and the configuration library includes the configuration parameter with which each of the application servers matches; namely, the configuration library stores the configuration parameters that each of the application servers requires for the application program, and a corresponding relationship between each of the application servers and the configuration parameter.

After the development of the application program is completed by software development staffs, the application program does not yet include the configuration parameter (the environment configuration item) at this moment, and the development staffs use a forwarding procedure to transmit the application program that does not include the configuration parameter (the environment configuration item) to the configuration library; optionally, the forwarding procedure uses a trace command. The configuration library configures, for the application program, the configuration parameter that corresponds to the application server in which release is to be made, and transmits, after completion of the configuration, the application program that includes the configuration parameter to the corresponding application server. Optionally, a command for transmitting the configuration-completed application program to the corresponding application server is a trace command.

The instant embodiment separates the configuration parameter from the application program and arranges an independent configuration library to store a configuration parameter matching with each one of the application servers, and when the application program is to be released, the configuration library conducts a corresponding configuration according to a release environment, reducing working load of the development staffs and increasing working efficiency.

In the system for adaptive release of application program in different environments of some embodiments, the configuration library, when receiving the application program that does not include a configuration parameter, simultaneously receives a configuration command, and the configuration command comprises application server information for releases of the application program to be made, and the configuration library reads in the application server information contained in the configuration command to search for a corresponding configuration parameter according to the corresponding relationship between each of the application servers and the configuration parameter for conducting a corresponding configuration for the application program, and after completion of the configuration, transmits the application program that includes the configuration parameter to the corresponding application server. Optionally, the configuration command is a trace command.

In the system for adaptive release of application program in different environments of some embodiments, the configuration library receives a configuration parameter adding command, and the configuration library receives and stores a configuration parameter corresponding to a newly added application server, and establishing a corresponding relationship between the newly added application server and the configuration parameter. The instant embodiment allows the development staffs to add new types of application server, and the development staffs only needs to add the configuration parameter corresponding to the newly added application server in the configuration library, and there is no need to modify the application program and repeated use is enabled, reducing working load of the development staffs and increasing working efficiency.

In the system for adaptive release of application program in different environments of some embodiments, the configuration library receives a configuration parameter deleting command, and the configuration library deletes the configuration parameter corresponding to the application server contained in the configuration parameter deleting command, and deletes the corresponding relationship between the application server and the configuration parameter. The instant embodiment allows the development staffs to delete an existing application server, and the development staffs only needs to delete the configuration parameter to which the newly added application server corresponds from the configuration library, and there is no need to modify the application program, reducing working load of the development staffs and increasing working efficiency.

In the system for adaptive release of application program in different environments of some embodiments, the configuration library receives a configuration parameter modifying command, and the configuration library receives contents of modification and modifies an already-stored configuration parameter. After completion of modification of the configuration library, parameter configuration is conducted again for the application program.

In a preferred embodiment, referring to FIG. 2, the method for adaptive release of application program in different environments is applicable to the system for adaptive release of application program in different environments of the previous embodiment, and the method comprises the following steps:
S1, a configuration library receiving an application program that does not include a configuration parameter, wherein the configuration library comprises at least two configuration parameters, each configuration parameter matching with an application server. Referring to FIG. 1, the system for adaptive release of application program in different environments comprises: a configuration library and at least two application servers, and the configuration library is in communication connection with each of the application servers; optionally, the configuration library is arrangeable in an independent server. Each of the application servers is operable in a different environment, meaning a configuration parameter required by each of the application servers for an application program is different. Taking a development environment parameter of a development application server and a test environment parameter of a test application server as an example, the two environment parameters are different. The instant embodiment separates configuration parameters from application programs, meaning the environment configuration item of an application program is set independent individually, and such configuration parameters (the environment configuration items) are individually set in the configuration library, and the configuration library includes the configuration parameter with which each of the application servers matches; namely, the configuration library stores the configuration parameter that each of the application servers requires for the application program, and a corresponding relationship between each of the application servers and the configuration parameter.
S2, the configuration library configures, for the application program, a configuration parameter that corresponds to the application server in which release is to be made. After the development of the application program is completed by software development staffs, the application program does not yet include the configuration parameter (the environment configuration item) at this moment, and the development staffs use a forwarding procedure to transmit the application program that does not include the configuration parameter (the environment configuration item) to the configuration library, and the configuration library configures, for the application program, the configuration parameter that corresponds to the application server in which release is to be made. Optionally, the forwarding procedure uses a trace command.
S3, after completion of the configuration, transmitting the application program that includes the configuration parameter to the corresponding application server. After the completion of the configuration, the application program that includes the configuration parameter is transmitted to the corresponding application server. Optionally, a command for transmitting the configuration-completed application program to the corresponding application server is a trace command.

The instant embodiment separates the configuration parameter from the application program and arranges an independent configuration library to store a configuration parameter matching with each one of the application servers, and when the application program is to be released, the configuration library conducts a corresponding configuration according to a release environment, reducing working load of the development staffs and increasing working efficiency.

In the method for adaptive release of application program in different environments of some embodiments, a configuration library receiving an application program that does not include a configuration parameter of Step S1 comprises: a configuration library receiving an application program that does not include a configuration parameter and a configuration command, the configuration command comprising application server information for releases of the application program to be made. Specifically, the configuration library, when receiving the application program that does not include a configuration parameter, simultaneously receives a configuration command, and the configuration command comprises application server information for releases of the application program to be made, and the configuration library reads in the application server information contained in the configuration command to search for a corresponding configuration parameter according to the corresponding relationship between each of the application servers and the configuration parameter for conducting a corresponding configuration for the application program, and after completion of the configuration, transmits the application program that includes the configuration parameter to the corresponding application server. Optionally, the configuration command is a trace command.

In some embodiments, the method for adaptive release of application program in different environments further comprises: S4, the configuration library receiving a configuration parameter adding command, the configuration library receiving and storing a configuration parameter corresponding to a newly added application server, and a corresponding relationship between the newly added application server and the configuration parameter. The instant embodiment allows the development staffs to add new types of application server, and the development staffs only needs to add the configuration parameter corresponding to the newly added application server in the configuration library, and there is no need to modify the application program and repeated use is enabled, reducing working load of the development staffs and increasing working efficiency.

In some embodiments, the method for adaptive release of application program in different environments further comprises: S5, the configuration library receiving a configuration parameter deleting command, and the configuration library deleting the configuration parameter corresponding to the application server contained in the configuration parameter deleting command, and deleting the corresponding relationship between the application server and the configuration parameter. The instant embodiment allows the development staffs to delete an existing application server, and the development staffs only needs to delete the configuration parameter to which the newly added application server corresponds from the configuration library, and there is no need to modify the application program, reducing working load of the development staffs and increasing working efficiency.

In some embodiments, the method for adaptive release of application program in different environments further comprises: S6, the configuration library receiving a configuration parameter modifying command, and the configuration library receiving contents of modification and modifying an already-stored configuration parameter. After completion of modification of the configuration library, parameter configuration is conducted again for the application program.

The instant embodiment separates the configuration parameter from the application program and arranges an independent configuration library to store a configuration parameter matching with each one of the application servers, and when the application program is to be released, the configuration library conducts a corresponding configuration according to a release environment, reducing working load of the development staffs and increasing working efficiency.

A progressive way is adopted to illustrate various embodiments of the disclosure. The description of each embodiment focuses on key features that are different from those of other embodiments. Similar parts of the various embodiments may refer to each other. For the devices disclosed in the embodiments, since they are corresponding to the methods disclosed in the embodiments, and the descriptions thereof are relatively simplified, and the related parts may refer to the descriptions of the methods.

Skilled artisans may further notice that the units and method steps of each example of the embodiments disclosed in this disclosure can be implemented in hardware or computer software or a combination of the two. To clearly illustrate the exchangeability of hardware and software, the illustration provided above demonstrates the components and steps of each example with a general description according to functions thereof. Whether such functions can be implemented with hardware or software is determined by the specific application and design requirement conditions of the technical solution. Skilled artisans may adopt different ways to implement the functions so described for each specific application, and such implementations should not be regarded as exceeding the scope of the present invention.

The steps of the method or algorithm described with reference to the embodiments disclosed in the disclosure can be implemented directly by means of hardware, or by means of software modules executable in a processor, or a combination of the two. The software modules may be loaded in a random access memory (RAM), an internal storage, a read only memory (ROM), an electrically programmable ROM, an electrically erasable ROM, a register, a hard disc drive, a mobile magnetic drive, a CD-ROM, or any other forms of storage medium known in the field.

The embodiments provided above are only for illustration of the technical thoughts and features of the present invention, for the purposes to help those skilled in the art to understand the contents of the present invention and to accordingly put into practice, and should not be construed as limiting to the scope of protection for the present invention. All variations and modifications that are considered equivalent to the scope of the appended claims of the application belong to the scope of the present invention as defined solely by the appended claims.

## Claims

1. A system for adaptive release of application program in different environments, **characterized by** comprising: a configuration library and at least two application servers, the configuration library comprising a configuration parameter matching with each of the application servers;
when an application program that does not include a configuration parameter is transmitted to the configuration library, the configuration library configuring, for the application program, the configuration parameter that corresponds to the application server in which release is to be made, and after completion of the configuration, the application program that includes the configuration parameter being transmitted to the corresponding application server.

2. The system for adaptive release of application program in different environments according to claim 1, **characterized in that** the configuration library, when receiving the application program that does not include a configuration parameter, simultaneously receives a configuration command, the configuration command comprising application server information for releases of the application program to be made.

3. The system for adaptive release of application program in different environments according to claim 1, **characterized in that** the configuration library receives a configuration parameter adding command, and the configuration library receives and stores a configuration parameter corresponding to a newly added application server.

4. The system for adaptive release of application program in different environments according to claim 1, **characterized in that** the configuration library receives a configuration parameter deleting command, and the configuration library deletes the configuration parameter corresponding to the application server contained in the configuration parameter deleting command.

5. The system for adaptive release of application program in different environments according to claim 1, **characterized in that** the configuration library receives a configuration parameter modifying command, and the configuration library receives contents of modification and modifies an already-stored configuration parameter.

6. A method for adaptive release of application program in different environments, **characterized by** comprising:
S1, a configuration library receiving an application program that does not include a configuration parameter, wherein the configuration library comprises at least two configuration parameters, each configuration parameter matching with an application server;
S2, the configuration library configuring, for the application program, a configuration parameter that corresponds to the application server in which release is to be made; and
S3, transmitting the application program that includes the configuration parameter to the corresponding application server.

7. The method for adaptive release of application program in different environments according to claim 6, **characterized in that** a configuration library receiving an application program that does not include a configuration parameter of Step S1 comprises:
the configuration library receiving an application program that does not include a configuration parameter and a configuration command, the configuration command comprising application server information for releases of the application program to be made.

8. The method for adaptive release of application program in different environments according to claim 6, **characterized by** further comprising:
S4, the configuration library receiving a configuration parameter adding command, and the configuration library receiving and storing a configuration parameter corresponding to a newly added application server.

9. The method for adaptive release of application program in different environments according to claim 6, **characterized by** further comprising:
S5, the configuration library receiving a configuration parameter deleting command, and the configuration library deleting the configuration parameter corresponding to the application server contained in the configuration parameter deleting command.

10. The method for adaptive release of application program in different environments according to claim 6, **characterized by** further comprising:
S6, the configuration library receiving a configuration parameter modifying command, and the configuration library receiving contents of modification and modifying an already-stored configuration parameter.
